# FASCICULE DE BREVET EUROPEEN

(11) **EP 3 399 480 B1**
(45) Date de publication et mention de la délivrance du brevet: **19.08.2020**
(21) Numéro de dépôt: 18167259.3
(22) Date de dépôt: 13.04.2018
(51) Int. Cl.: G06Q 10/08, G06Q 50/28

(54) **PROCÉDÉ DE LIVRAISON D'AU MOINS UN COLIS DANS LE COFFRE D'UN VÉHICULE CLIENT**
VERFAHREN ZUM LIEFERN MINDESTENS EINES PAKETS IN DEN KOFFERRAUM EINES KUNDENFAHRZEUGS
METHOD FOR DELIVERING AT LEAST ONE PACKAGE TO THE LUGGAGE COMPARTMENT OF A CUSTOMER VEHICLE

(30) Priorité: 04.05.2017 FR 1753958
(43) Date de publication de la demande: 07.11.2018
(73) Titulaire: PSA Automobiles SA, 78300 Poissy (FR)
(72) Inventeur: DELPORTE, Denis Albert, 59267 Proville (FR)

(56) Documents cités:
- WO-A1-2017/035052
- US-A1- 2016 019 775
- US-A1- 2016 189 098
- US-A1- 2016 314 429
- US-A1- 2016 342 943
- US-A1- 2017 017 920
- US-A1- 2017 024 688

## Description

L'invention concerne, de façon générale, la livraison de colis par des véhicules automobiles de livraison.

L'invention porte plus particulièrement sur un procédé de livraison d'au moins un colis directement dans le véhicule d'un client.

De manière connue, lorsqu'un client passe une commande sur internet, un colis contenant la commande est ensuite livré au client, à son domicile ou sur son lieu de travail par exemple. Un transporteur se déplace alors jusqu'à l'adresse indiquée avec le colis afin de le lui livrer.

Pour des raisons de sécurité, le transport des colis est suivi par géolocalisation afin de permettre au client ainsi qu'au transporteur de vérifier l'avancement de la livraison. Il est notamment connu des logiciels de suivi permettant à l'entreprise de transport de suivre la localisation des véhicules de sa flotte et ainsi de suivre les colis qu'ils transportent. Cependant, de tels logiciels ne permettent pas de localiser individuellement chaque colis.

Par ailleurs, il est connu par le document US20040069850 d'identifier un colis sortant d'un véhicule de livraison à l'aide de la technologie RFID, pour Radio Frequency IDentification en langue anglaise. Chaque colis comprend une étiquette d'identification par radiofréquence, également désignée étiquette RFID, qui lui est propre et qui peut être lue à différentes étapes de sa livraison afin d'identifier le colis et fournir un suivi du colis. Le véhicule de livraison comprend un lecteur adapté pour lire l'étiquette RFID du colis. Ainsi, lors du déchargement du véhicule de livraison, le colis est identifié grâce à la lecture de ce code, ce qui permet d'avoir un suivi du colis jusqu'à sa remise au client. On connaît aussi par le document WO2017/035052 un service d'échange de colis en nuage servant à la livraison de colis à un véhicule de destination, et à la prise en charge à partir de celui-ci, et comprenant un module de proximité à base de GPS. Le module de proximité à base de GPS reçoit des coordonnées GPS actuelles d'un véhicule de livraison de colis et du véhicule de destination. On connaît aussi par le document US2016/189098 une méthode pour sélectionner au moins un véhicule à proximité d'un emplacement de livraison qui peut accepter la livraison d'un élément pour un utilisateur.

Cependant, un colis est généralement livré sur le lieu d'habitation du client. Or, le client n'est pas toujours présent chez lui lorsque le véhicule de livraison arrive pour la livraison du colis, empêchant alors une remise dudit colis au client. Le transporteur doit donc repartir avec le colis et ne peut finaliser sa livraison. Ceci oblige le transporteur à planifier une nouvelle livraison chez le client ou le client à venir récupérer son colis auprès du transporteur, ce qui représente un inconvénient majeur.

L'invention vise donc à résoudre ces inconvénients en proposant un procédé permettant de suivre la livraison d'un colis tout en facilitant la remise d'un tel colis au client, y compris en son absence à l'adresse indiquée.

Pour parvenir à ce résultat, la présente invention concerne un procédé de livraison d'au moins un colis, associé à un numéro de colis client, dans un coffre d'un véhicule client par un véhicule de livraison, le colis comprenant une étiquette d'identification par radiofréquence, le véhicule de livraison comprenant un lecteur par radiofréquence adapté pour lire ladite étiquette d'identification, et le véhicule client comprenant le coffre dont l'ouverture peut être commandée à distance, le procédé comprenant :
- une étape de réception de la géolocalisation du véhicule client,
- une étape de géolocalisation du véhicule de livraison,
- une étape de lecture par le lecteur par radiofréquence de l'étiquette d'identification lorsque le colis est sorti du véhicule de livraison,
- une étape de comparaison du numéro de colis lu sur l'étiquette d'identification avec le numéro de colis client,
- une étape de comparaison de la géolocalisation du véhicule de livraison avec la géolocalisation du véhicule client, et
- une étape d'autorisation de l'ouverture du coffre du véhicule client si le numéro de colis lu correspond au numéro du colis du client et si la géolocalisation du véhicule de livraison correspond à celle du véhicule client afin de livrer le colis dans le coffre.

Grâce au procédé selon l'invention, un colis peut être livré à un client même en son absence grâce à la livraison dans le coffre de son véhicule. Avantageusement, l'autorisation de l'ouverture du coffre du véhicule client est sécurisée grâce à la géolocalisation du véhicule du livreur qui doit correspondre à celle du véhicule client. De plus, la technologie d'identification par radiofréquence permet de rendre aisée la communication d'informations relatives au colis à livrer.

Avantageusement, la géolocalisation du véhicule de livraison est déterminée par l'intermédiaire d'un terminal portable comprenant des moyens de géolocalisation.

Avantageusement, le procédé comprend une étape d'envoi des données lues par le lecteur par radiofréquence sur l'étiquette d'identification à un terminal portable et une étape d'envoi desdites données par le terminal portable à un serveur distant adapté pour vérifier lesdites données.

Avantageusement, l'autorisation d'ouverture est envoyée par le véhicule client à un terminal portable.

Avantageusement, le procédé comprend une étape d'ouverture du coffre suite à l'étape d'autorisation.

Avantageusement, l'étape d'autorisation une sous-étape de réception par un terminal portable d'une clé d'ouverture et comprend une sous-étape d'envoi de ladite clé d'ouverture au véhicule client.

Avantageusement, l'étape d'autorisation comprend une sous-étape préalable d'identification du livreur.

Avantageusement, le procédé comprend des étapes préliminaires de lecture de l'étiquette d'identification du colis lors de son chargement dans le véhicule de livraison, et d'envoi d'un message d'alerte au client afin de l'informer de l'état de la livraison du colis.

L'invention concerne également un système comprenant un véhicule de livraison et un véhicule client, le véhicule de livraison comprenant des premiers moyens de géolocalisation, le véhicule client comprenant des deuxièmes moyens de géolocalisation, un lecteur par radiofréquence, un coffre et des moyens d'autorisation d'ouverture à distance dudit coffre, ledit système étant configuré pour mettre en œuvre le procédé tel que décrit précédemment.

D'autres caractéristiques et avantages de l'invention apparaîtront à la lecture de la description détaillée des modes de réalisation de l'invention, donnés à titre d'exemple uniquement, et en référence aux dessins qui montrent :

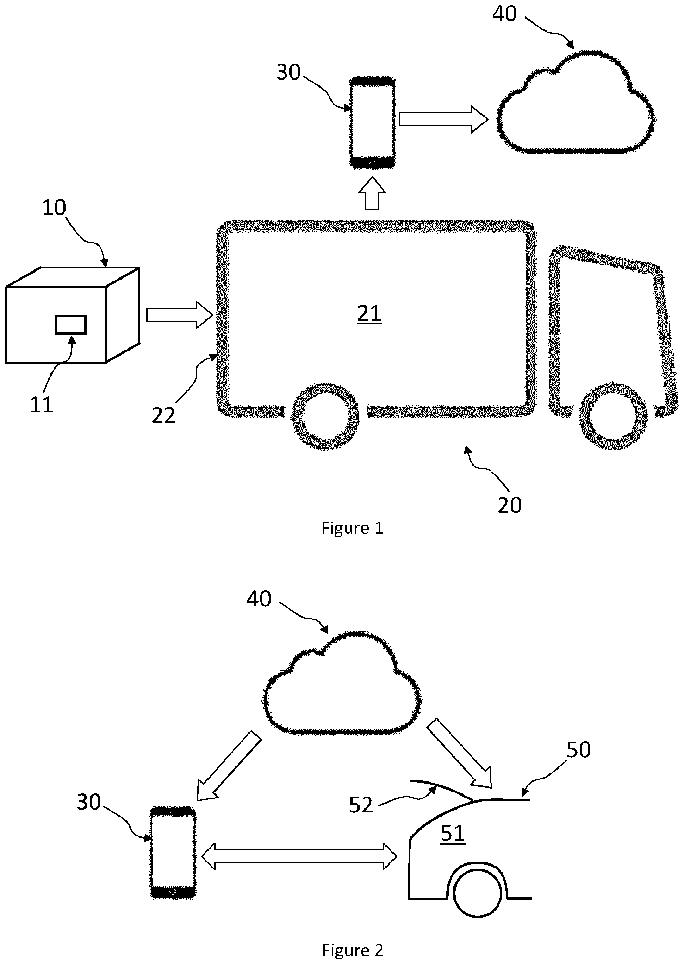

- les figures 1 et 2, des scénarios de mise en œuvre du procédé selon l'invention.

Dans ce qui va suivre, les modes de réalisation décrits s'attachent plus particulièrement à une mise en œuvre du procédé de livraison selon l'invention dans le domaine des véhicules automobiles. Cependant, toute mise en œuvre dans un contexte différent, en particulier dans tout type de véhicule, est également visée par la présente invention.

L'invention est destinée à permettre à un transporteur de livrer un colis 10 à un client. Pour ce faire, en référence à la figure 1, le colis 10 à livrer est chargé dans un véhicule de livraison 20 du transporteur afin que ce dernier se déplace jusqu'au client afin de lui remettre le colis 10.

Le colis 10 comprend du matériel, tel que de la marchandise commandée par le client sur internet. Le colis 10 comprend une enveloppe, par exemple en carton, recouvrant la marchandise afin de la protéger durant le transport. Le colis 10 comprend par ailleurs une étiquette d'identification 11, également désignée tag, placée sur l'enveloppe, notamment par collage. Une telle étiquette d'identification 11 est de préférence une étiquette d'identification par radiofréquence pouvant être lue par un lecteur à radiofréquence. La technologie d'identification par radiofréquence, également désignée RFID pour Radio Frequency IDentification en langue anglaise, est connue et ne sera pas détaillée plus en détail. L'étiquette d'identification 11 comprend des données relatives au colis, tels que le nom du client, des données indicatives relatives à la destination du colis 10, etc, qui peuvent être obtenues par lecture de l'étiquette d'identification 11 par un lecteur RFID. L'utilisation de la technologie RFID permet de sécuriser les données tout en limitant les coûts.

Le véhicule de livraison 20 illustré à la figure 1, comprend une zone de chargement 21 dans laquelle sont chargés des colis 10. Le véhicule de livraison 20 se déplace jusqu'aux lieux de livraison des différents colis 10 afin de les délivrer à chaque client. Pour ce faire, le véhicule de livraison 20 comprend un lecteur RFID (non représenté) adapté pour lire l'étiquette d'identification 11 de chaque colis 10 lors du chargement du colis 10 dans la zone de chargement 21 du véhicule de livraison 20. Ainsi, le véhicule de livraison 20 peut se rendre à l'adresse de livraison lue dans l'étiquette d'identification 11. Avantageusement, le lecteur RFID peut être monté après la fabrication du véhicule de livraison 20. Le lecteur RFID est alimenté en énergie électrique par une batterie d'alimentation (non représentée) du véhicule de livraison 20.

Le véhicule de livraison 20 comprend deux portes arrière 22 d'accès à la zone de livraison 21. Le véhicule de livraison 20 comprend, selon une forme de réalisation préférée, un lecteur RFID monté sur une des portes arrière 22. Ainsi, le lecteur RFID peut lire l'étiquette d'identification 11 d'un colis 10 lors du chargement et du déchargement du colis 10 de la zone de chargement 21. Avantageusement, le véhicule de livraison 20 comprend un capteur (non représenté) d'ouverture de la porte arrière 22 permettant de commander l'allumage du lecteur RFID lors d'une détection d'ouverture de la porte arrière 22. Ainsi, le lecteur RFID est éteint lorsque la porte arrière 22 est fermée afin de limiter sa consommation en énergie électrique et le lecteur RFID est allumé automatiquement lorsque la porte arrière 22 est ouverte afin de charger ou de décharger un colis 10, ce qui permet de limiter les actions qu'un opérateur doit effectuer pour lire l'étiquette d'identification 11 d'un colis 10.

Un véhicule de livraison 20 peut également comprendre une porte latérale (non représentée) d'accès à la zone de chargement 21. Un lecteur RFID mobile (non représenté) peut alors être utilisé afin de lire l'étiquette d'identification 11 d'un colis 10 chargé et/ou déchargé par la porte latérale.

Le véhicule de livraison 20 comprend en outre des moyens de communication (non représentés), de préférence sans fil, par exemple de type Bluetooth®, avec un terminal portable 30, tel qu'un smartphone, notamment le smartphone du conducteur du véhicule de livraison 20. Les moyens de communication sont adaptés pour recevoir les données lues par le lecteur RFID et les envoyer au terminal portable 30. Ainsi, le conducteur du véhicule de livraison 20 peut lire sur le terminal portable 30 l'adresse de livraison des colis 10 chargés dans le véhicule de livraison 20. Avantageusement, si le terminal portable 30 n'est pas à portée des moyens de communication sans fil lors de la lecture de l'étiquette d'identification 11, le lecteur RFID stocke les données lues jusqu'à ce que le terminal portable 30 soit à portée.

Le terminal portable 30 peut également communiquer avec un service à distance 40 afin de fournir un suivi du colis 10. Le terminal portable 30 est adapté pour envoyer au service à distance 40 les données lues sur l'étiquette d'identification 11 d'un colis 10. Ainsi, lors du chargement d'un colis 10, le service à distance 40 reçoit le numéro du colis 10 en cours de livraison afin d'en avertir le client.

De préférence, le terminal portable 30 comprend des premiers moyens de géolocalisation (non représentés). Le terminal portable 30 est adapté pour envoyer sa géolocalisation au service à distance 40 lorsque le véhicule de livraison 20 est arrivé à l'adresse de livraison d'un colis 10. Avantageusement, les échanges depuis le terminal portable 30 sont effectués à partir d'une application installée sur le terminal portable 30.

Le service à distance 40 se présente de préférence sous la forme d'un serveur informatique. Le service à distance 40 peut être celui du commerçant auprès duquel le client a commandé la marchandise qui doit être livrée. Lorsque le client passe une commande, ce dernier rentre des informations qui sont enregistrées dans le serveur informatique. Les informations peuvent comprendre le nom du client, la géolocalisation du véhicule client 50 dans lequel le colis 10 doit être livré, l'identité du transporteur choisi pour assurer la livraison du colis 10, etc.

Le service à distance 40 peut comparer l'identité du transporteur à une base de données comprenant la liste des transporteurs autorisés à ouvrir le coffre 51 d'un véhicule client 50 comme cela sera décrit par la suite.

Le service à distance 40 compare également la géolocalisation du véhicule de livraison 20 et la géolocalisation du véhicule client 50 afin de contrôler que ces dernières correspondent et donc que le véhicule de livraison 20 peut livrer le colis 10.

Enfin, le service à distance 40 peut vérifier si le colis 10 dont l'étiquette d'identification 11 a été lue par le lecteur RFID du véhicule de livraison 20 correspond bien au colis 10 qui doit être livré au client.

Après avoir effectué ces vérifications, le service à distance (40) peut envoyer au terminal portable 30 une autorisation d'ouverture du coffre 51 afin de permettre à un opérateur de commander l'ouverture du coffre 51 afin d'y déposer un colis 10. L'autorisation d'ouverture se présente sous la forme d'une clé de délégation d'ouverture du coffre 51. Une telle clé est avantageusement temporaire afin de sécuriser le coffre 51 du véhicule client 50.

Le service à distance 40 peut communiquer avec le terminal portable 30 du conducteur du véhicule de livraison 20, mais également avec le véhicule 50 du client.

Le véhicule client 50 comprend des moyens de communication sans fil et des deuxièmes moyens de géolocalisation. En référence à la figure 2, Le véhicule client 50 comprend également un coffre 51 et une porte d'accès 52 audit coffre 51, ladite porte 52 comprenant des moyens d'ouverture qui peuvent être commandés à distance. Les moyens de communication sans fil sont adaptés pour communiquer avec le service à distance 40 afin d'envoyer la géolocalisation du véhicule client 50 au véhicule de livraison 20 afin que ce dernier puisse se déplacer jusqu'au véhicule client 50 pour livrer un colis 10.

Les moyens de commandes à distance de la porte 52 peuvent être du type SDCM, pour Short Distance Communication Module en langue anglaise. Ainsi, un terminal portable 30 qui a reçu du serveur à distance 40 une autorisation, peut communiquer avec le système SDCM du véhicule client 50 afin de commander l'ouverture du coffre 51. Un opérateur peut alors déposer le colis 10 dans le coffre 51.

Il va maintenant être présenté la mise en œuvre du procédé selon l'invention de livraison d'un colis 10 dans le coffre 51 d'un véhicule client 50.

Un client passe une commande sur une boutique en ligne et donne des informations, telles que des identifiants (nom, prénom, adresse mail, numéro de téléphone, etc.) et un identifiant de son véhicule client 50 ou bien la géolocalisation de son véhicule client 50.

La boutique en ligne transmet ces informations ainsi qu'un identifiant du colis 10 et l'identifiant du transporteur au service à distance 40.

Un colis 10 comprenant la commande du client est alors préparé et une étiquette d'identification 11 associée à l'identifiant du colis 10 est collée sur le colis 10. La commande passe alors au statut « préparé »

Le transporteur récupère ensuite le colis 10 afin de livrer le colis 10 au client.

Le jour de la livraison du colis 10, le véhicule client 50 envoie au service à distance 40 sa géolocalisation.

Le colis 10 est chargé dans le véhicule de livraison 20 et l'étiquette d'identification 11 est lue par le lecteur RFID du véhicule de livraison 20 lors de son chargement.

Le lecteur RFID transmet au terminal portable 30 les données lues dans l'étiquette d'identification 11 qui les envoie au service à distance 40. Le service à distance 40 identifie le colis 10 dont l'étiquette 11 a été lue et envoie au terminal portable 30 la géolocalisation du véhicule client 50 correspondant au client du colis 10. Le statut de la commande passe alors à « en transit ». Le service à distance 40 peut également déterminer le temps avant livraison du colis 10 dans le coffre 51.

Le véhicule de livraison 20 se déplace ensuite jusqu'à la géolocalisation reçue. Durant le transport, la géolocalisation du colis 10 peut être suivie ainsi que le temps passé depuis le départ et le temps restant avant livraison.

Un opérateur décharge alors le colis 10 du véhicule de livraison 20 et l'étiquette d'identification 11 est lue lors de son déchargement. L'application du terminal portable 30 demande alors confirmation que le colis 10 est en cours de déchargement ou bien si l'étiquette d'identification 11 a été lue par erreur deux fois au chargement.

Le lecteur RFID envoie alors au terminal portable 30 les données lues. Le terminal portable 30 envoie alors sa géolocalisation au service à distance 40 ainsi que la date et l'heure de livraison du colis 10. La commande passe à l'état « livré ».

Le service à distance 40 vérifie alors si le colis 10 dont l'étiquette d'identification 11 a été lue correspond au colis 10 à livrer. Le service à distance 40 vérifie également si la géolocalisation du terminal portable 30 correspond à la géolocalisation du véhicule client 50.

Si le colis 10 et la géolocalisation correspondent, le service à distance 40 envoie au terminal mobile 30 une autorisation d'ouverture du coffre 51 du véhicule client 50.

L'opérateur se déplace alors à proximité du véhicule client 50 avec le colis 10 et le terminal mobile 30. Lorsque la distance entre le terminal mobile 30 et le véhicule client 50 est suffisamment faible, le terminal mobile 30 envoie au système SDCM du véhicule client 50 l'autorisation d'ouverture. Les moyens d'ouverture commandent alors le déverrouillage de la porte 52 d'accès au coffre.

L'opérateur peut ainsi livrer le colis 10 dans le coffre 51. Puis l'opérateur referme le coffre 51 qui est alors verrouillé afin de sécuriser le colis 10.

De plus, grâce à la lecture de l'étiquette d'identification 11 lors du chargement et du déchargement du colis 10 du véhicule de livraison 20, le client peut être prévenu lorsque le colis 10 est en cours de livraison puis lorsque le colis a été livré dans son coffre 51. Le client peut suivre l'état de sa commande (préparé, en transit ou livré) et peut également connaître l'heure de livraison prévue et l'heure réelle de livraison.

## Revendications

1. Procédé de livraison d'au moins un colis (10), associé à un numéro de colis client, dans un coffre (51) d'un véhicule client (50) par un véhicule de livraison (20), le colis (10) comprenant une étiquette d'identification (11) par radiofréquence, le véhicule de livraison (20) comprenant un lecteur par radiofréquence adapté pour lire ladite étiquette d'identification (11), et le véhicule client (50) comprenant le coffre (51) dont l'ouverture peut être commandée à distance, le procédé comprenant :
- une étape de réception de la géolocalisation du véhicule client (50),
- une étape de géolocalisation du véhicule de livraison (20),
- une étape de lecture par le lecteur par radiofréquence de l'étiquette d'identification (11) lorsque le colis (10) est sorti du véhicule de livraison (20),
- une étape de comparaison d'un numéro de colis lu sur l'étiquette d'identification avec le numéro de colis client,
- une étape de comparaison de la géolocalisation du véhicule de livraison (20) avec la géolocalisation du véhicule client (50), et
- une étape d'autorisation de l'ouverture du coffre (51) du véhicule client (50) si le numéro de colis (10) lu correspond au numéro du colis (10) du client et si la géolocalisation du véhicule de livraison (20) correspond à celle du véhicule client (50) afin de livrer le colis (10) dans le coffre (51).

2. Procédé selon la revendication précédente, dans lequel la géolocalisation du véhicule de livraison (20) est déterminée par l'intermédiaire d'un terminal portable (30) comprenant des moyens de géolocalisation.

3. Procédé selon l'une des revendications précédentes, comprenant une étape d'envoi des données lues par le lecteur par radiofréquence sur l'étiquette d'identification (11) à un terminal portable (30) et une étape d'envoi desdites données par le terminal portable (30) à un serveur distant (40) adapté pour vérifier lesdites données.

4. Procédé selon la revendication précédente, dans laquelle une autorisation d'ouverture est envoyée par le serveur distant (40) à un terminal portable (30).

5. Procédé selon l'une des revendications précédentes, comprenant une étape d'ouverture du coffre (51) suite à l'étape d'autorisation.

6. Procédé selon la revendication précédente, dans lequel l'étape d'autorisation comprend une sous-étape de réception par un terminal portable (30) d'une clé d'ouverture et une sous-étape d'envoi de ladite clé d'ouverture au véhicule client (50).

7. Procédé selon la revendication précédente, dans laquelle l'étape d'autorisation comprend une sous-étape préalable d'identification du livreur.

8. Procédé selon l'une des revendications précédentes, comprenant des étapes préliminaires :
- de lecture de l'étiquette d'identification (11) du colis (10) lors de son chargement dans le véhicule de livraison (20), et
- d'envoi d'un message d'alerte au client afin de l'informer de l'état de la livraison du colis (10).

9. Système comprenant un véhicule de livraison (20) et un véhicule client (50), le véhicule de livraison (20) comprenant des premiers moyens de géolocalisation, le véhicule client (50) comprenant des deuxièmes moyens de géolocalisation, un lecteur par radiofréquence, un coffre (51) et des moyens d'autorisation d'ouverture à distance dudit coffre (50), ledit système étant configuré pour mettre en œuvre le procédé selon l'une des revendications précédentes.

## Patentansprüche

1. Verfahren zum Zustellen mindestens eines einer Kunden-Paketnummer zugeordneten Pakets (10) in einen Kofferraum (51) eines Kundenfahrzeugs (50) durch ein Lieferfahrzeug (20), wobei das Paket (10) ein Radiofrequenz-Identifikationsetikett (11) umfasst, das Lieferfahrzeug (20) ein RadiofrequenzLesegerät umfasst, das geeignet ist, das Identifikationsetikett (11) zu lesen, und das Kundenfahrzeug (50) den Kofferraum (51) umfasst, dessen Öffnung ferngesteuert werden kann, wobei das Verfahren umfasst:
- ein Schritt, bei dem die Geolokalisierung des Kundenfahrzeugs empfangen wird (50),
- einen Geolokalisierungsschritt für das Lieferfahrzeug (20),
- einen Schritt des Lesens des Identifikationsetiketts (11) durch das RadiofrequenzLesegerät, wenn das Paket (10) aus dem Lieferfahrzeug (20) herausgenommen wird,
- ein Schritt zum Vergleich einer auf dem Identifikationsetikett gelesenen Paketnummer mit der Kunden-Paketnummer,
- einen Schritt zum Vergleichen der Geolokalisierung des Lieferfahrzeugs (20) mit der Geolokalisierung des Kundenfahrzeugs (50), und
- einen Schritt zur Autorisierung der Öffnung des Kofferraums (51) des Kundenfahrzeugs (50), wenn die gelesene Paketnummer (10) der Nummer des Pakets (10) des Kunden entspricht und wenn die Geolokalisierung des Lieferfahrzeugs (20) der des Kundenfahrzeugs (50) entspricht, um das Paket (10) im Kofferraum (51) zuzustellen.

2. Verfahren nach dem vorstehenden Anspruch, wobei die Geolokalisierung des Lieferfahrzeugs (20) über ein tragbares Endgerät (30) mit Geolokalisierungsmitteln bestimmt wird.

3. Verfahren gemäß einem der vorhergehenden Ansprüche, das einen Schritt des Sendens der von dem Lesegerät gelesenen Daten über Funkfrequenz von dem Identifikationsetikett (11) an ein tragbares Endgerät (30) und einen Schritt des Sendens der Daten durch das tragbare Endgerät (30) an einen entfernten Server (40) umfasst, der geeignet ist, die Daten zu verifizieren.

4. Verfahren gemäß dem vorstehenden Anspruch, bei dem eine Öffnungsautorisierung von dem entfernten Server (40) an ein tragbares Endgerät (30) gesendet wird.

5. Ein Verfahren gemäß einem der vorhergehenden Ansprüche, das einen Schritt des Öffnens des Tresors (51) nach dem Autorisierungsschritt umfasst.

6. Verfahren gemäß dem vorhergehenden Anspruch, wobei der Autorisierungsschritt einen Unterschritt des Empfangens eines Öffnungsschlüssels durch ein tragbares Endgerät (30) und einen Unterschritt des Sendens des Öffnungsschlüssels an das Kundenfahrzeug (50) umfasst.

7. Verfahren gemäß dem vorhergehenden Anspruch, wobei der Autorisierungsschritt einen vorherigen Unterschritt der Identifizierung des Überbringers umfasst.

8. Ein Verfahren gemäß einem der vorhergehenden Ansprüche, das vorläufige Schritte umfasst:
- das Lesen des Identifikationsetiketts (11) des Pakets (10), wenn es in das Lieferfahrzeug (20) geladen wird, und
- Senden einer Warnmeldung an den Kunden, um ihn über den Status der Zustellung des Pakets zu informieren (10).

9. System, das ein Lieferfahrzeug (20) und ein Kundenfahrzeug (50) umfasst, wobei das Lieferfahrzeug (20) erste Geolokalisierungsmittel umfasst, wobei das Kundenfahrzeug (50) zweite Geolokalisierungsmittel, ein Radiofrequenzlesegerät, einen Kofferraum (51) und Mittel zur Autorisierung der Fernöffnung des Kofferraums (50) umfasst, wobei das System so konfiguriert ist, dass es das Verfahren gemäß einem der vorhergehenden Ansprüche ausführt.

## Claims

1. A method of delivering at least one parcel (10), associated with a customer parcel number, into a boot (51) of a customer vehicle (50) by a delivery vehicle (20), the parcel (10) comprising a radio-frequency identification label (11), the delivery vehicle (20) comprising a radio-frequency reader adapted to read said identification label (11), and the customer vehicle (50) comprising the boot (51) whose opening can be remotely controlled, the method comprising :
- a step of receiving the geolocation of the customer vehicle (50),
- a geolocation step for the delivery vehicle (20),
- a step of reading by the radio frequency reader of the identification label (11) when the package (10) is taken out of the delivery vehicle (20),
- a step to compare a parcel number read on the identification label with the customer parcel number,
- a step for comparing the geolocation of the delivery vehicle (20) with the geolocation of the customer vehicle (50), and
- a step of authorizing the opening of the trunk (51) of the customer vehicle (50) if the parcel number (10) read corresponds to the number of the customer's parcel (10) and if the geolocation of the delivery vehicle (20) corresponds to that of the customer vehicle (50) in order to deliver the parcel (10) in the trunk (51).

2. A method according to the preceding claim, wherein the geolocation of the delivery vehicle (20) is determined via a portable terminal (30) comprising geolocation means.

3. Method according to one of the preceding claims, comprising a step of sending the data read by the reader by radio frequency from the identification label (11) to a portable terminal (30) and a step of sending said data by the portable terminal (30) to a remote server (40) adapted to verify said data.

4. A method according to the preceding claim, wherein an opening authorization is sent by the remote server (40) to a portable terminal (30).

5. A method according to one of the preceding claims, comprising a step of opening the vault (51) following the authorization step.

6. A method according to the preceding claim, wherein the authorization step comprises a sub-step of receiving by a portable terminal (30) an opening key and a sub-step of sending said opening key to the client vehicle (50).

7. A method according to the preceding claim, wherein the authorization step comprises a prior sub-step of identifying the deliverer.

8. A method according to one of the preceding claims, comprising preliminary steps :
- reading the identification label (11) of the package (10) when it is loaded into the delivery vehicle (20), and
- sending an alert message to the customer to inform him/her of the status of the delivery of the package (10).

9. System comprising a delivery vehicle (20) and a customer vehicle (50), the delivery vehicle (20) comprising first geolocation means, the customer vehicle (50) comprising second geolocation means, a radio frequency reader, a boot (51) and means for authorising remote opening of said boot (50), said system being configured to implement the method according to one of the preceding claims.
